(19) Europäisches Patentamt
European Patent Office
Office européen des brevets

(11) Veröffentlichungsnummer: **0 167 952 B1**

(12) # EUROPÄISCHE PATENTSCHRIFT

(45) Veröffentlichungstag der Patentschrift: **24.07.91**

(51) Int. Cl.5: **C09B 67/44**, C09B 67/26, C09B 67/34

(21) Anmeldenummer: **85108117.4**

(22) Anmeldetag: **29.06.85**

(54) **Farbstoff-Lösungen.**

(30) Priorität: **13.07.84 DE 3425813**
**13.02.85 DE 3504964**

(43) Veröffentlichungstag der Anmeldung:
**15.01.86 Patentblatt 86/03**

(45) Bekanntmachung des Hinweises auf die Patenterteilung:
**24.07.91 Patentblatt 91/30**

(84) Benannte Vertragsstaaten:
**CH DE FR GB LI**

(56) Entgegenhaltungen:
**DE-A- 2 529 658**
**DE-A- 2 657 995**
**DE-A- 2 948 292**
**DE-A- 3 207 534**
**GB-A- 2 051 139**

(73) Patentinhaber: **BAYER AG**

**W-5090 Leverkusen 1 Bayerwerk(DE)**

(72) Erfinder: **Wolff, Joachim, Dr.**
**Neuenhauserweg 6**
**W-5060 Bergisch-Gladbach 2(DE)**
Erfinder: **Wolf, Karlheinz, Dr.**
**Paul-Klee-Strasse 77**
**W-5090 Leverkusen 1(DE)**
Erfinder: **Marschner, Werner, Dipl.-Ing.**
**Karl-Jaspers-Strasse 17**
**W-5090 Leverkusen 3(DE)**

**EP 0 167 952 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Anmeldung betrifft konzentrierte, wäßrige, lagerstabile Lösungen enthaltend 7-35 Gew.-% Reakivfarbstoff mit wasserlöslichmachenden Gruppen und Reaktivgruppen der Formeln

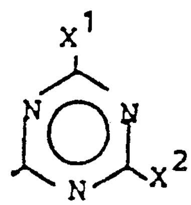

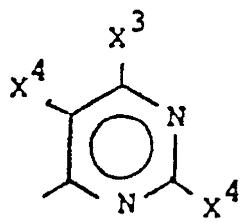

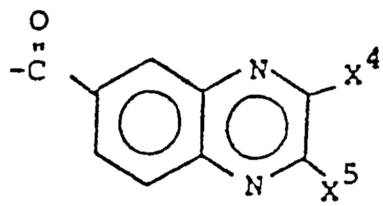

worin
$X_1$ = F
$X_2$ = Cl, F, $NH_2$, $NHR^2$, $OR^2$, $CH_2R^2$, $SR^2$
$X_3$ = Cl, F, $CH_3$
$X_4$ = Cl, F
und
$X_5$ = Cl, F, $CH_3$
und wobei
$R^2$ =
Alkyl (insbesondere gegebenenfalls durch OH, $SO_3H$, COOH, substituiertes $C_1$-$C_4$-Alkyl), Aryl (insbesondere gegebenenfalls durch $SO_3H$, $C_1$-$C_4$-Alkyl, $C_1$-$C_4$-Alkoxy substituiertes Phenyl), Aralkyl (insbesondere gegebenenfalls durch $SO_3H$, $C_1$-$C_4$-Alkyl, $C_1$-$C_4$-)Alkoxy substituiertes Benzyl),
dadurch gekennzeichnet, daß sie Cyanamide der allgemeinen Formel

$$(N\equiv)_m \underset{(R_1)_n}{\underset{|}{\overset{(NH)_n}{\overset{\|}{C}}}} - NH_2 \qquad (1)$$

worin

$R_1$ = NH - C $\equiv$ N

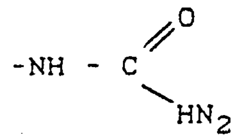

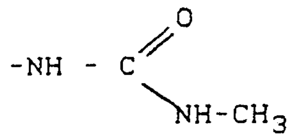

mit
n = 0 und m = 1 oder
n = 1 und m = 0
enthalten.

Bevorzugte Verbindung (1) ist Dicyandiamid der Formel

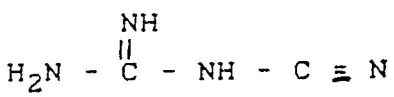 (2)

Die Lösungen enthalten im allgemeinen 0,1 - 15 Gew.-% einer Verbindung (1), vorzugsweise 1 Gew.-% bis 10 Gew.-%.

Die Lösungen können gegebenenfalls löslichkeitserhöhende wassermischbare organische Verbindungen enthalten, beispielsweise ethoxylierte Ammoniumverbindungen, niedere aliphatische oder cyclische Amide, bevorzugt ε-Caprolactam und N-Methylpyrrolidon und/oder niedere aliphatische Sulfoxide und/oder schwefelhaltige Verbindungen wie Dimethylsulfon, Diethylsulfon, Sulfolan, Sulfolen und deren in α- und/oder ß-Stellung substituierten Derivate und/oder hydrotrope Verbindungen wie Thioharnstoff und Harnstoff, sowie deren Derivate, besonders bevorzugt N,N'-Dimethylharnstoff. Bei Anwendung nicht reaktiver Farbstoffe sind desweiteren Mischungen mit Aminen wie z.B. Triethylamin, Triethanolamin und ähnlicher Derivate sowie Mischungen mit Glykolen und deren Ether einsetzbar.

Weiterhin können die Lösungen übliche Stellmittel bzw. Zusatzstoffe enthalten beispielsweise anorganische Salze wie sie bei der Synthese anfallen, im allgemeinen etwa 0 - 10 Gew.-%, vorzugsweise 5 Gew.-%, Puffersubstanzen, Dispergiermittel, insbesondere anionische Dispergiermittel beispielsweise Kondensationsprodukte aus aromatischen Sulfonsäuren wie Naphthalinsulfonsäuren, Ditolylethersulfonsäuren oder Terphenylsulfonsäuren und Formaldehyd.

Als anionische Reaktivfarbstoffe kommen prinzipiell alle Typen in Betracht soweit sie wasserlöslichmachende Gruppen aufweisen. Sie können den verschiedensten Klassen angehören, z.B. der Reihe der metallfreien oder metallhaltigen Mono- oder Polyazofarbstoffe, metallfreien oder metallhaltigen Azaporphinfarbstoffe wie Kupfer- Kobalt- oder Nickelphthalocyaninfarbstoffe, der Anthrachinon-, Oxazin-, Dioxazin-, Triphenylmethan-, Nitro-, Azomethin-, metallfreie oder metallhaltigen Formazanfarbstoffe.

Sie sind beispielsweise in "Colour Index" 3. Ed. Vol. 1, S. 1001 bis 1562 beschrieben.

Die anionischen Farbstoffe enthalten z.B. als wasserlöslichmachende Gruppe eine oder mehrere COOH-Gruppen, bevorzugt aber $SO_3H$-Gruppen oder deren Salze.

Unter Reaktivfarbstoffe versteht man Farbstoffe, die eine oder mehrere reaktive Gruppen oder abspaltbare Substituenten aufweisen, welche beim Aufbringen der Farbstoffe auf Cellulosematerialien in Gegenwart säurebindender Mittel und gegebenenfalls unter Einwirkung von Wärme mit den Hydroxylgruppen der Cellulose oder beim Aufbringen auf Superpolyamidfasern, wie Wolle, mit den NH-Gruppen dieser Fasern unter Ausbildung kovalenter Bindungen zu reagieren vermögen.

Farbstoffe, welche die obengenannten Reaktivgruppensysteme enthalten sind beispielsweise aus folgenden Publikationen bekannt:
US-PS 3 377 336, US-PS 3 527 760
GB-PS 1 169 254, US-PS 3 669 951

DE-PS 1 644 208, GB-PS 1 188 606
DE-OS 2 817 780, ES-PS 479 771

Die in den erfindungsgemäßen Präparationen enthaltenen Reaktivfarbstoffe können auch Kombinationen zweier Reaktivreste enthalten.

Bevorzugte Lösungen anionischer Reaktivfarbstoffe enthalten:

| | |
|---|---|
| 7 - 35 Gew.-% | anionischen Reaktivfarbstoffe |
| 0 - 30 Gew.-% | löslichkeitserhöhende wassermischbare organische Verbindungen und/oder hydrotrope Verbindungen und/oder Dispergiermittel |
| 0,1 - 15 Gew.-% | Verbindungen der Formel (1) |
| 0 - 10 Gew.-% | anorganische Salze, bevorzugt < 5 Gew.-% |
| 0 - 5 Gew.-% | Puffersubstanzen |
| ad 100 Gew.-% | Wasser |

Geeignete Puffersubstanzen sind insbesondere solche für den pH-Bereich 4,5 bis 8,5 Gew.-% wie Borsäure, Phosphatpuffer und Hydrogencarbonatpuffer.

Als wassermischbare organische Verbindungen und/oder hydrotrope Verbindungen kommen beispielsweise in Betracht:
Ein- und mehrwertige Alkohole und deren Ether, wasserlösliche aliphatische oder cyclische Amide, Lactame, Lactone, ethoxylierte Ethanolamine oder gegebenenfalls Oxygruppen enthaltende Nitrile, wie z.B. Dimethylformamid, ε-Caprolactam, N-Methylpyrrolidon, γ-Butyrolacton, Acetonitril, Hydroxypropionitril, Ethylencarbonat, Ethylglykol, Diethylenglykolmonoethylether oder Umsetzungsprodukte von Triethanolamin oder Triethanolammoniumhydroxid mit Ethylenoxid.

Geeignet sind ferner als Zusatzstoffe nichtionogene Tenside wie langkettige oxethylierte Amine, Alkohole und Phenole sowie anorg. oder org. Säuren wie beispielsweise Ameisensäure, Methansulfonsäure, Essigsäure, Zitronensäure oder Milchsäure.

Vorteilhafterweise verwendet man zur Herstellung der Lösungen solche Farbstoffe, die einen möglichst geringen (zumeist synthesebedingten) Anteil an organischen Salzen (Sulfate, Chloride etc.) aufweisen.

Solche salzarmen Produkte kann man auf verschiedene Weise erhalten:

a) Der salzhaltige Presskuchen bzw. die getrocknete salzhaltige Fabrikware wird mehrfach mit destilliertem Wasser gewaschen und erneut isoliert.

b) Der bei der Synthese anfallende Farbstoffslurry wird mittels Druckpermeation entsalzt und aufkonzentriert (DE-A 2 948 292).

c) Speziell für heterocyclische Reaktivgruppen enthaltene Farbstoffe eignet sich z.B. die Herstellung der Lösung direkt zur Synthese gemäß DE-A 3 207 534 oder DE-A 2 529 657.

Die erfindungsgemäßen konzentrierten Lösungen zeichnen sich durch eine hohe Lagerstabilität bei Temperaturen von -10 °C bis 30 °C aus. Im hohen Maße überraschend ist. daß bei Lösungen der Reaktiv-Farbstoffe auch nach 4 Wochen Lagerung bei 40 °C bei Zusatz der Verbindungen der Formel (1) keine Hydrolyse auftritt.

Lagerstabile Lösungen von Reaktivfarbstoffen sind bereits bekannt: DE-A 2 529 658, DE-A 2 948 292, DE-A 3 207 534. Die dort genannten Lösungsmittel liefern jedoch bei einer ganzen Reihe von Farbstoffen unbefriedigende Ergebnisse.
Aus GB-A-2,051,139 sind Farbstoff-Druckpasten bekannt, die u.a. Harnstoff und Dicyandiamid enthalten können.

So ist es bislang nicht gelungen, im ausreichenden Maße auch bei höheren Temperaturen (4 Wochen 50 °C) lagerstabile Lösungen von pyrimidinreaktivgruppenhaltigen Azofarbstoffen des I-Säure-Types, beispielsweise den Farbstoff der Formel 6 unter Zusatz von Lösevermittlern herzustellen.

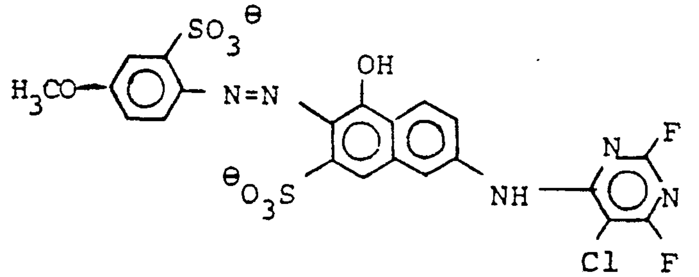

$2(Na^+, Li^+)$

(6)

Es hat sich als im hohen Maße überraschend gezeigt, daß bei Zugabe von nur 2,3 Gew.-% Dicyandiamid (Formel 2) zu einer Suspension bestehend aus 11 Gew.-% Reaktivfarbstoff der Formel (6), ca. 1 Gew.-% $Li_2SO_4$ und 88 Gew.-% Wasser bei pH = 7 eine über Wochen lagerstabile Farbstofflösung erhalten wird. Auch bei anderen Reaktivfarbstofflösungen erweist sich Dicyandiamid bei niedrigen Einsatz-Konzentrationen als äußerst wirkungsvoller Lösevermittler.

Die erfindungsgemäßen Reaktiv-Farbstoffpräparationen weisen besonders den Vorteil auf, daß sie auch bei hohen Färbetemperaturen (> 160 °C), die beispielsweise bei Polyester/Baumwolle-Mischfasern in der Praxis üblich sind und nach Zusatz der für die Reaktivfärberei üblichen Hilfsmittel, hohe Farbausbeute liefern.

Bevorzugte erfindungsgemäße Reaktivfarbstofflösungen sind insbesondere auch solche, die Farbstoffe des Typs

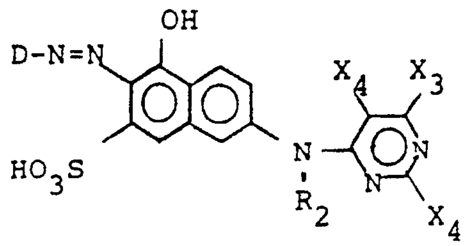

(Säureform)

(7)

worin

D =

Rest einer sulfogruppenhaltigen Diazokomponente der Benzol- oder Naphthalinreihe,

$R_2$ =

H, $CH_3$, $C_2H_5$

enthalten, insbesondere solche mit dem Rest

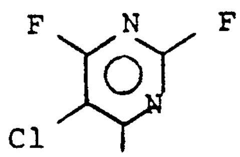

(8)

Die erfindungsgemäßen konzentrierten Farbstofflösungen können auch für den Fall, daß sie keine bei Raumtemperatur flüssigen Lösevermittler enthalten, getrocknet und anschließend zu einem Pulver gemahlen werden. Vor und nach dem Trocknen können weitere übliche Einstellmittel und/oder Puffersubstanzen untergemischt werden.

Beispiel 1

Zu 997,5 g einer wäßrigen Suspension, die 11 Gew.-% des Reaktivfarbstoffs

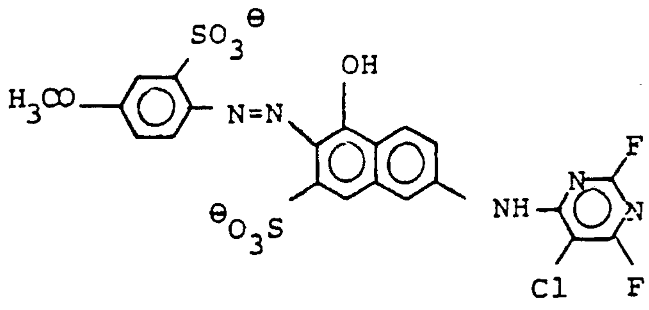

$Na^{\oplus}$, $Li^{\oplus}$

(6)

ca 1 % anorg. Salze wie $Li_2SO_4$, LiCl, $Na_2SO_4$, 0,5 Gew.-% Borsäure enthält werden bei 20 °C unter Rühren 2,5 g Dicyandiamid gegeben. Nach kurzer Zeit erhält man eine lagerstabile Lösung des Reaktivfarbstoffs (6). Auch nach 4 Wochen 40° C Lagerung tritt keine wesentliche Hydrolyse des Farbstoffs ein. Nach Zusatz der für die Reaktivfärberei üblichen Hilfsmittel ist die erfindungsgemäße Lösung direkt zum Färben von natürlichen und regenerierten Cellulosefasern in rot-gelbem Ton geeignet.

Beispiel 2

1 Mol des Anthrachinonfarbstoffs der Formel

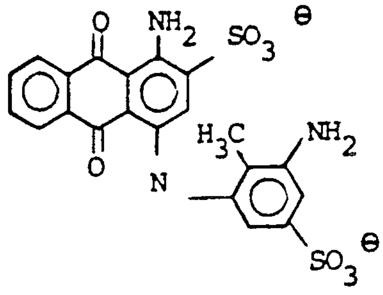

$Na^{\oplus}$, $Li^{\oplus}$ (9)

werden in einer Lösung aus 17 g Dicyandiamid und 2,650 g Wasser mit 1,0 Mol 2,4,6-Trifluor-5-Chlorpyrimidin bei pH = 5,5 umgesetzt. Der pH-Wert wird während der Reaktion durch Zugabe von $Li_2CO_3$ bei 5,5 gehalten. Nach beendeter Reaktion wird die Dispersion mit soviel ε-Caprolactam, Dicyandiamid, Borsäure und Wasser versetzt, daß die resultierende Reaktivfarbstofflösung folgender Zusammensetzung entspricht:

| | |
|---|---|
| 15 % | Reaktivfarbstoff |
| 17 % | ε-Caprolactam |
| 3 % | Dicyandiamid |
| 2 % | Lithiumsalze |
| 0,5 % | Borsäure |
| ad 100 Gew.-% | Wasser |

Die Lösung ist über Monate bei Temperaturen von 0° C bis 40° C lagerstabil. Nach Zusatz der für die Reaktivfärberei üblichen Hilfsmittel ist die erfindungsgemäße Lösung direkt zum Färben von natürlichen und regenerierten Cellulosefasern in brillantblauem Ton geeignet.

Beispiel 3

1 Mol des Cu-Azo-Farbstoffs der Formel

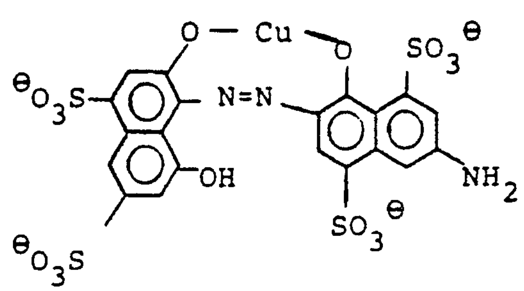

3 $Na^{+}$
1 $Li^{+}$ (10)

wird in 6,2 l Wasser, 800 g ε-Caprolactam, 240 g Dicyandiamid gelöst. Bei 20° C wird der Farbstoff (10) bei pH = 5,5 mit 1 Mol 2,4,6-Trifluor-5-Chlorpyrimidin umgesetzt, wobei der pH-Wert während der Reaktion durch Zugabe von $Li_2CO_3$ konstant gehalten wird. Nach beendeter Reaktion wird soviel ε-Caprolactam, Dicyandiamid, Borsäure und Wasser zugesetzt, daß die resultierende Reaktivfarbstofflösung folgender Zusammensetzung entspricht:

| | |
|---|---|
| 8,5 % | Reaktivfarbstoff |
| 10 % | ε-Caprolactam |
| 1 % | Li-Salze |
| 3 % | Dicyandiamid |

| | |
|---|---|
| 0,5 % | Borsäure |
| ad 100 Gew.-% | Wasser |

Beispiel 4

1 Mol des Anthrachinonfarbstoffs der Formel (11)

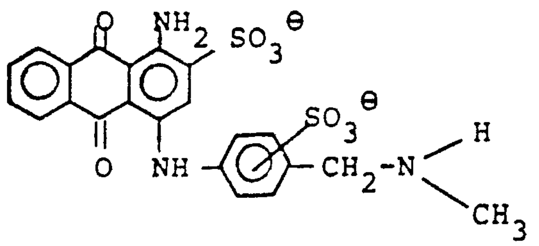

Li⊕, Na⊕

(11)

wird in 400 g N,N'-Dimethylharnstoff, 80 g Dicyandiamid und 1,300 g Wasser nahezu gelöst und bei 25° C innerhalb von 3 h mit 1,05 Mol 2,3-Dichlorchinoxalincarbonsäurechlorid umgesetzt. Der pH-Wert wird während der Reaktion durch Zugabe von $LiOH \cdot H_2O$ bei 7,5 gehalten. Nach beendeter Reaktion wird soviel N,N'-Dimethylharnstoff, Dicyandiamid, Borsäure und Wasser zugesetzt, daß die resultierende Reaktivfarbstofflösung nach Abfiltrieren des hydrolysierten 2,3-Dichlorchinoxalincarbonsäurechlorids folgender Zusammensetzung entspricht:

| | |
|---|---|
| 20 % | Reaktivfarbstoff |
| 20 % | N,N'-Dimethylharnstoff |
| 3 % | Dicyandiamid |
| 1 % | Li-Salze |
| 0,5 % | Borsäure |
| ad 100 Gew.-% | Wasser |

Die resultierende Lösung ist über Monate nach Lagerung bei Temperaturen von 0° C bis 30° C stabil.

Beispiel 5

1 Mol des salzarmen Reaktivfarbstoffs

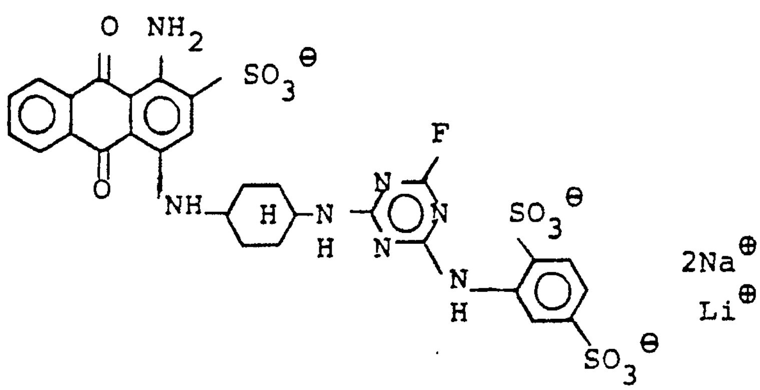

(12)

werden in 1,000 g ε-Caprolactam, 4,500 g Wasser und 210 g Dicyandiamid gelöst, mit wenig $LiOH \cdot H_2O$ auf pH = 8,5 gestellt, mit Phosphat gepuffert und soweit verdünnt, daß in der Endlösung enthalten sind:

| | |
|---|---|
| 11,5 % | Reaktivfarbstoff (12) |
| 15 % | ε-Caprolactam |
| 3 % | Dicyandiamid |
| 0,5 % | $Na_2HPO_4$ |
| 1 % | $Na_2SO_4$, NaCl |
| ad 100 Gew.-% | Wasser |

Beispiel 6

1 Mol des salzarmen (<3 % NaCl, $Na_2SO_4$) Reaktivfarbstoffs der Formel

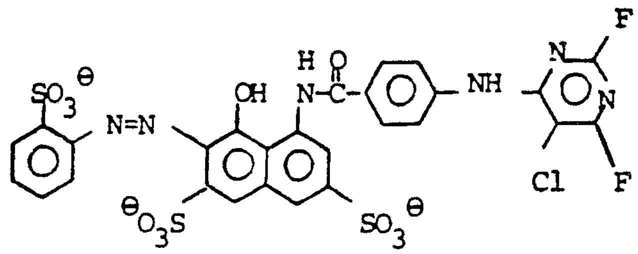

2 Na⊕ Li⊕

(14)

werden in 1.100 g ε-Caprolactam, 200 g Dicyandiamid und 4.600 g Wasser bei pH = 7,5 gelöst. Nach Einstellung mit 0,5 % Borsäure (pH-Einstellung mit LiOH) resultiert eine lagerstabile Lösung.

Beispiel 7

1 Mol des salzarmen (<3 % NaCl, $Na_2SO_4$) Reaktivfarbstoffs der Formel

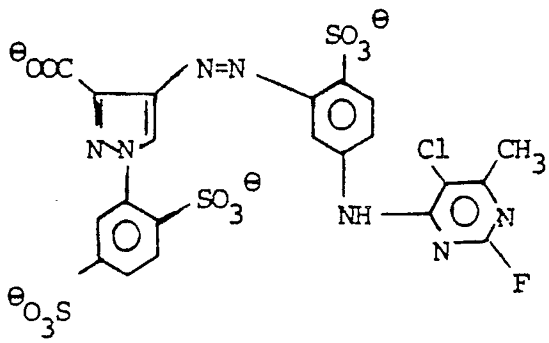

3 Na⊕ 1 Li⊕

(15)

werden in 1.200 g ε-Caprolactam, 70 g Dicyandiamid und 4.900 g Wasser bei pH = 8,5 gelöst. Nach Zugabe von 30 g $NaHCO_3$ resultiert eine über Monate lagerstabile Lösung.

**Patentansprüche**

1. Konzentrierte wäßrige Lösungen enthaltend 7-35 Gew.-% Reaktivfarbstoff mit wasserlöslichmachenden Gruppen und Reaktivgruppen der Formeln

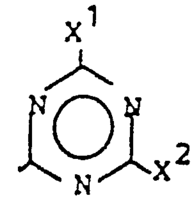

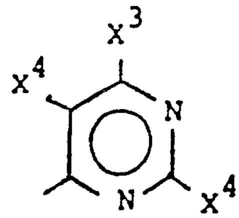

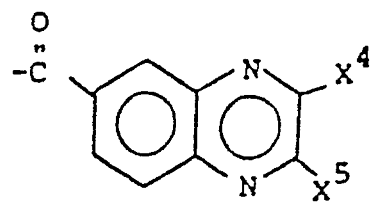

worin

$X_1$ = F

$X_2$ = Cl, F, $NH_2$, $NHR^2$, $OR^2$, $CH_2R^2$, $SR^2$

$X_3$ = Cl, F, $CH_3$

$X_4$ = Cl, F

und

$X_5$ = Cl, F, $CH_3$

und wobei

$R^2$ = Alkyl, Aryl, Aralkyl

dadurch gekennzeichnet, daß sie Cyanamide der allgemeinen Formel

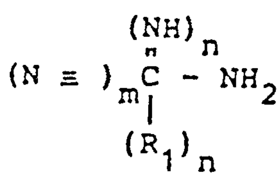

(1)

enthalten, worin

$R_1$ = NH-C≡N

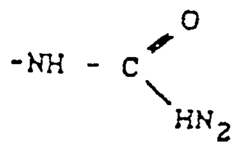

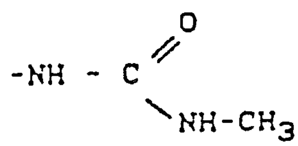

mit
n = 0 und m = 1 oder
n = 1 und m = 0.

**2.** Lösungen gemäß Anspruch 1, enthaltend Farbstoffe der Formel

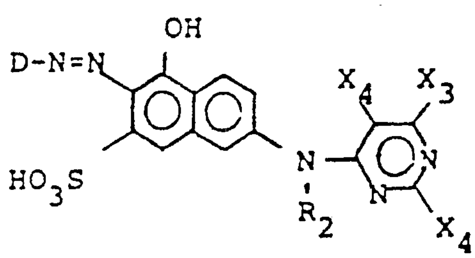

worin
D = Rest einer sulfogruppenhaltigen Diazokomponente der Benzol - oder Naphthalinreihe und
$R_2$ = H, $CH_3$, $C_2H_5$.

**3.** Wässrige Lösungen gemäß Ansprüchen 1 und 2, enthaltend

| | |
|---|---|
| 7 - 35 Gew.-% | anionischen, Reaktivfarbstoff |
| 0 - 30 Gew.-% | löslichkeitserhöhende wassermischbare organische Verbindungen und/oder hydrotrope Verbindungen und/oder Dispergiermittel |
| 0,1 - 15 Gew.-% | Verbindung der Formel (1) |
| 0 - 10 Gew.-% | anorganische Salze |
| 0 - 5 Gew.-% | Puffersubstanzen. |

**4.** Wässrige Lösungen gemäß Ansprüchen 1-3, enthaltend ε-Caprolactam oder N,N'-Dimethylharnstoff oder Harnstoff.

## Claims

**1.** Concentrated aqueous solutions containing 7-35% by weight of reactive dyestuff having water-solubilising groups and reactive groups of the formulae

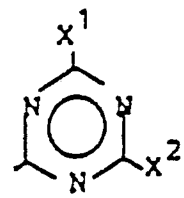

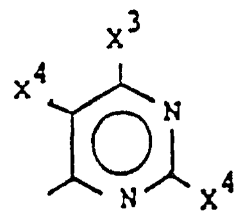

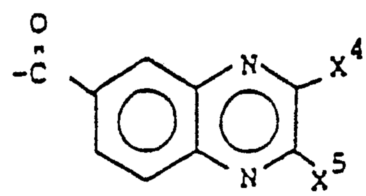

wherein

$X_1$ = F

$X_2$ = Cl, F, $NH_2$, $NHR^2$, $OR^2$, $CH_2R^2$, $SR^2$

$X_3$ = Cl, F, $CH_3$

$X_4$ = Cl, F

and

$X_5$ = Cl, F, $CH_3$

and wherein

$R^2$ = alkyl, aryl, aralkyl,

characterised in that they contain cyanamides of the general formula

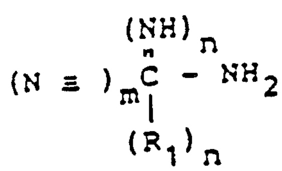

(1)

wherein

$R_1$ = NH-C≡N

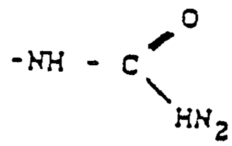

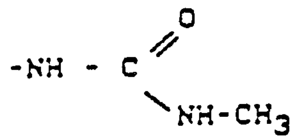

where
n = 0 and m = 1 or
n = 1 and m = 0.

**2.** Solutions according to Claim 1, containing dyestuffs of the formula

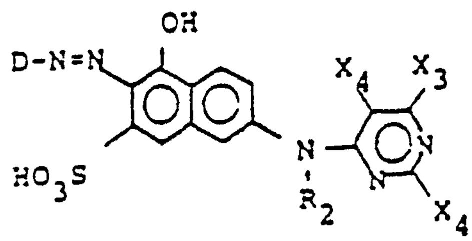

wherein
D = radical of a sulpho-containing diazo component of the benzene or naphthalene series and
$R_2$ = H, $CH_3$, $C_2H_5$.

**3.** Aqueous solutions according to Claims 1 and 2, containing

| | |
|---|---|
| 7 - 35% | by weight of anionic reactive dyestuff |
| 0 - 30% | by weight of solubility-increasing water-miscible organic compounds and/or hydrotropic compounds and/or dispersants |
| 0.1 - 15% | by weight of compound of the formula (1) |
| 0 - 10% | by weight of inorganic salts |
| 0 - 5% | by weight of buffer substances. |

**4.** Aqueous solutions according to Claims 1-3, containing ε-caprolactam or N,N'-dimethylurea or urea.

**Revendications**

**1.** Solutions aqueuses concentrées contenant 7 à 35 % en poids d'un colorant réactif comportant des groupes de solubilisation dans l'eau et des groupes réactifs répondant aux formules :

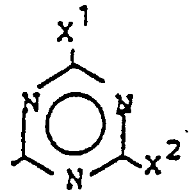

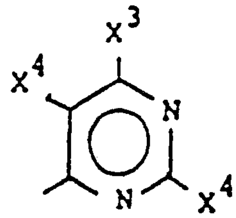

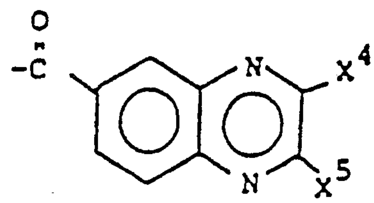

dans lesquelles

$X_1$ = F

$X_2$ = Cl, F, $NH_2$, $NHR^2$, $OR^2$, $CH_2R^2$, $SR^2$

$X_3$ = Cl, F, $CH_3$

$X_4$ = Cl, F

$X_5$ = Cl, F, $CH_3$,

et

$R^2$ représente un groupe alkyle, aryle, aralkyle, solutions caractérisées en ce qu'elles contiennent des cyanamides répondant à la formule générale

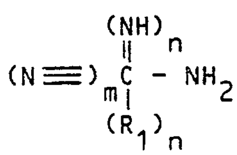 (1)

dans laquelle

$R_1$ représente NH-C≡N

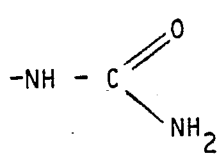

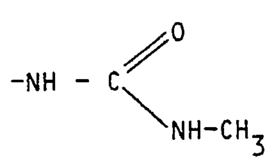

avec
n nul et m valant 1, ou bien
n valant 1 et m nul.

**2.** Solutions selon la revendication 1, contenant des colorants de formule

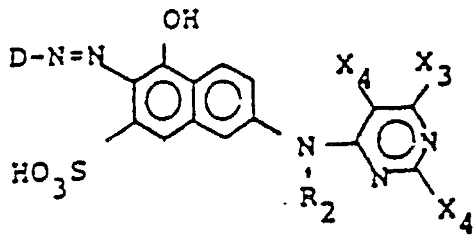

dans laquelle
D représente le reste d'un composant diazotable de la série du benzène ou du naphtalène, contenant des groupes sulfo, et
$R_2$ représente H, $CH_3$ ou $C_2H_5$.

**3.** Solutions aqueuses selon les revendications 1 et 2, contenant

| | |
|---|---|
| 7 à 35 % | en poids d'un colorant réactif anionique, |
| 0 à 30 % | en poids de composés organiques miscibles à l'eau et augmentant la solubilité, et/ou des composés hydrotropes et/ou des dispersants, |
| 0,1 à 15 % | en poids du composé de formule (1), |
| 0 à 10 % | en poids de sels minéraux, |
| 0 à 5 % | en poids de substances tampons. |

**4.** Solutions aqueuses selon l'une quelconque des revendications 1 à 3, contenant de l'ε-caprolactame ou de la N,N'-diméthylurée ou de l'urée.